# EUROPEAN PATENT APPLICATION

(11) **EP 2 607 726 A1**
(43) Date of publication of application: **26.06.2013**
(21) Application number: 11290594.8
(22) Date of filing: 22.12.2011
(51) Int. Cl.: F16C 25/06, F16C 33/60, F16C 43/04

(54) **Method for manufacturing a roller bearing**

(71) Applicant: Aktiebolaget SKF, 41 550 Göteborg (SE)
(72) Inventor: Cordier, Stephane, 37000 Tours (FR); Liverato, Yves-André, 37370 Saint Paterne Racan (FR); Massoteau, Charles, 37320 Louans (FR)
(74) Representative: Kohl, Thomas

(57) **Abstract**

The invention relates to a method for manufacturing a roller bearing, wherein at least one of the inner ring and the outer ring of the bearing is split into two separate rings (12a, 12b). It is proposed that the method comprises the steps of measuring an internal clearance between the rolling elements (14) of the bearing and a raceway provided on a second one of the separate rings (12a, 12b), axially displacing the second ring (12b) so as to achieve a desired value of the internal clearance, wherein the axial displacement is controlled based on the measured value of the axial clearance; and permanently immobilizing the second ring (12b) using the immobilization means (12d, 12e) such that an axial distance between the two separate rings (12a, 12b) is permanently fixed.

## Description

The invention relates to a method for manufacturing a roller bearing and to a roller bearing.

The internal clearance or the play within a ball bearing or another type of roller bearing is defined as the geometrical clearance between the inner ring, outer ring and the rolling elements. It is a critical factor in bearing selection and has a direct and important impact onto bearing life, heat, vibration, noise, and fatigue life.

It is therefore an important factor to control the internal clearance as good as possible.

Rigid ball bearings do often have a construction clearance, which is generally obtained by pairing parts. This means that the dimensional accuracy of these parts has to be very high, which leads to increased costs.

On the other hand, it is known in the field of tapered roller bearings to control the clearance by axial adjustment of one of the rings and not by pairing. In these cases, the clearance is often set and modified during the assembly of the bearing in its final application. As a consequence, the setting of the clearance is out of the control of the bearing manufacturer, who is therefore unable to furnish a guarantee for the lifetime of the bearing. Further, the assembly and mounting process of the bearing in its final application is rendered complex due to the requirement of setting the clearance. Precise measurements are often impractical and the assembler has to rely on his experience and feeling in this regard. Therefore, this process is susceptible to errors.

The most widely used assembly method for bearings was developed by Robert Conrad as is described e.g. in the US patent 822,723 of 1906. In order to fill the balls into a bearing with deep grooves, inner and outer races of the bearing are radially offset such that a large radial gap therebetween is created on one side and the rings touch each other on the radially opposite side. The bearing is then filled by placing the balls into the large gap and by then distributing them homogeneously around the bearing assembly while re-centering the inner ring. Finally, the spacing of the balls is fixed by inserting a cage. The Conrad method has the disadvantage that it is impossible to achieve high filling ratios because a certain angular region, the width of which depends on the depth of the grooves, the radii of the inner and the outer ring and the radius of the balls, has to be kept free during the filling. As a consequence, Conrad bearings have a reduced load-carrying capacity compared to a full-complement bearing.

In view of the above, it is the object of the invention to provide a method for manufacturing and assembling a roller bearing with a precisely controlled internal clearance, low complexity in mounting in its final destination, low costs and increased manufacturing tolerance.

The above object is achieved by a method for manufacturing roller bearings according to claim 1 and by a roller bearing according to claim 15. The roller bearing includes an inner ring having at least one inner raceway, an outer ring having at least one outer raceway, and at least one set of rolling elements contacting said inner raceway and said outer raceway in contact points. Preferably, the contact points are axially offset to one another, i.e. the roller bearing is either an angular contact bearing or a 4-point contact bearing. Preferably, the bearing is a ball bearing with the outer raceway and the inner raceway being grooves. The improved assembly of the bearing is particularly advantageous in the latter cases. At least one of the inner ring and the outer ring is split into at least two separate rings each having at least a part of a raceway formed therein. Further, the bearing is provided with immobilization means for immobilizing a movable one of the two separate rings. In the already assembled bearing, the distance between the two separate rings and the axial internal clearance of the bearing are both finally and unchangeably fixed by the immobilization means.

According to the invention, this distance is fixed during the assembly of the bearing and prior to assembling the bearing into the device where it is finally used. The method for manufacturing the roller bearing comprises preparing a partially assembled bearing unit including a first ring out of the two separate rings, implementing the set of rolling elements in the partially assembled bearing unit such that the rolling elements contact the raceway or the fraction of the raceway of the first ring, and mounting a second ring out of the two separate rings onto the bearing unit so as to be axially displaceable, in particular such that a clearance between the raceway on the second ring and the rolling elements at this stage of the procedure is larger than the clearance desired for the final product.

The clearance is then adjusted by a method comprising the steps of measuring an axial clearance between the rolling elements and the raceway provided on the second ring and axially displacing the second ring so as to achieve a desired value of the axial clearance. The latter steps may be iterated until a desired tolerance for the clearance has been reached. The clearance may be measured by axially displacing the second ring or the rolling elements until they abut on the respectively other element, by optical means or by axially displacing the inner or the outer ring in order to measure the remaining play of the bearing. Alternatively or as a complementary measure, the radial clearance may be measured.

If the desired clearance has been reached, the second ring is permanently immobilized, in particular in relation to the first ring, such that the axial distance between the two separate rings is fixed. This step of immobilizing the second ring should be completed without exerting axial forces onto this second ring, i.e. either by creating an adhesive bond using a hardening material or by fixing the second ring using radial forces only, e.g. with a pin, a screw or the like, which could be fitted in a radial hole drilled after the adjustment of the clearance or by radially pressing a fixing element or the like. Avoiding axial forces helps to prevent an undesired displacement of the second ring after the adjustment of its position. Further, the axial displacement of the second ring may be hindered or avoided by means of a press-fitting connection enabling its axial displacement only when strong forces are applied or by a thread engaging with a mating thread such that the second ring can be axially displaced only when it is simultaneously rotated.

In further embodiments of the invention, it is possible to use means for immobilizing the two separate rings comprising immobilization ring axially abutting with the second ring. This immobilization ring could be provided with a thread or adhesively bonded to an element connected with the first ring, e.g, a sleeve or a set of axially extending brackets.

Further, the immobilization means could be sealed, e.g., using welding, a suitable resin or the like.

The invention may be applied to single-row or double-row bearings, wherein the bearings in the latter case are preferably of angular-contact type with X- or O-configurations.

It is preferable that the split ring for which the clearance is adjusted is a non-rotating ring of the bearing in its final application. In this case, minor imbalances due to the immobilization or sealing may be tolerable.

The step of axially displacing the second ring for achieving a desired value of the axial clearance may in particular include calculating a target displacement value based on the measured axial or radial clearance and displacing the second ring by an amount corresponding to the thus calculated target value. This calculation may employ a characteristic derived from the curvature profile of the raceways or determined empirically.

In particular in the case where the second ring has a press-fitting connection with a part connected to the first ring, the step of axially displacing the second ring may include progressively increasing an axial load exerted on the second ring until the desired displacement is obtained.

One of the major advantages of the invention as compared to other methods for assembling bearings is that all the raceways and all of the rolling elements may be individually hardened in advance and prior to assembling the bearing. A complicated hardening of the completely assembled bearing unit or of partially assembled bearing units may thus be avoided.

In contrast to Conrad bearings, it is possible to obtain high filling ratios of 80 or 95 % up to full complement bearings while ensuring a precisely controlled clearance.

Further advantages and features of the invention will be evident from the following description of preferred embodiments thereof. The claims, the specification and the drawings contain multiple features in specific combinations, and the skilled person will easily be able to consider further combinations or sub-combinations thereof in order to adapt the invention as defined in the independent claims to his specific needs.

### BRIEF DESCRIPTION OF THE DRAWINGS

Figure 1 is a four-point contact ball bearing according to the invention.
Figure 2 illustrates an intermediate configuration of the four-point contact ball bearing according to Figure 1 during its assembly.
Figure 3 is a double-row ball bearing for a tensioner according to a second embodiment of the invention.
Figure 4 is a single-row support bearing according to a third embodiment of the invention with a non-rotating outer ring.
Figure 5 is a hub bearing according to a fourth embodiment of the invention.
Figure 6 is a further hub bearing with a rotating outer ring according to a fifth embodiment of the invention:
Figure 7 is a sheet-metal bearing hub according to a sixth embodiment of the invention.
Figure 8 is a bearing for a single-row tensioner according to a seventh embodiment of the invention.
Figure 9 is a bearing for a water pump spindle according to an eighth embodiment of the invention.
Figure 10 is a double-row bearing according to a ninth embodiment of the invention.

### DETAILED DESCRIPTION OF THE EMBODIMENTS

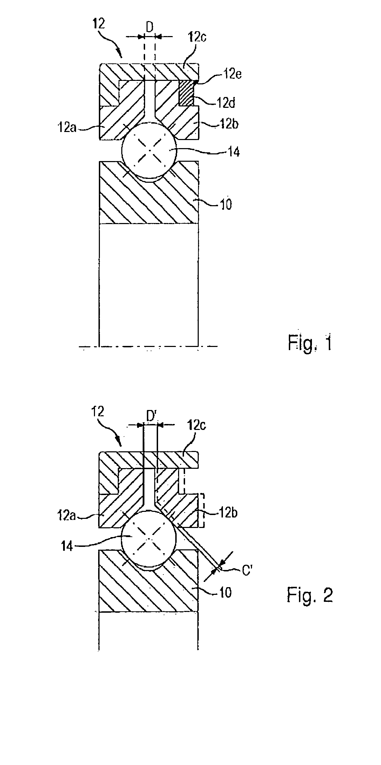

Figure 1 is a schematic view of a four-point-contact ball bearing with deep grooves, a solid inner ring 10, and a split outer ring 12 comprising two separate rings 12a, 12b, each comprising a part of the outer raceway of the bearing. The outer raceway and the inner raceway have radii which are slightly larger than the radius of the balls which are the rolling elements 14 of the bearing. The raceways of the outer ring 12 and of the inner ring 10 are formed as grooves, the depth of which is equal or larger than 30-40 % of the radius of the rolling element 14. The separate rings 12a, 12b constituting the outer ring 12 may be formed as solid metal rings or as pressed sheet-metal elements. The rolling elements 14, which arc homogeneously distributed around the circumference of the bearing, contact the outer raceway and the inner raceway in two points, respectively. The clearance D is provided between the rings 12a, 12b constituting the outer ring in the assembled state as illustrated in Figure 1. The separate rings 12a, 1.2b are fit into a retainer ring 12c of the outer ring 12 in a light press-fitting connection which, as such, would allow for an axial movement of the separate rings 12a, 12b within the retainer ring 12c.

In the assembled state as shown in Figure 1, this axial movement is prohibited by means of an immobilization ring 12d which is fitted into the retainer ring 12c and, then, adhesively bonded to the retainer ring 12c by welding points 12e or the like. The immobilization ring 12d and the welding points 12e, which are homogeneously distributed around the circumference of the bearing, constitute immobilization means of the outer ring 12 of the bearing.

The rolling elements 14 are not pressurized between the raceways of the inner ring 10 and the outer ring 12, but are rather held within the grooves with a minute play, i.e. the internal clearance of the bearing (not illustrated). This internal clearance (before mounting) is set to a predetermined value which is chosen such that the operational clearance of the mounted bearing in its final destination and use is virtually zero.

The internal clearance of the bearing is selected so that a suitable operational clearance will be obtained when the bearings are mounted with the fits usually recommended and operation conditions and temperatures being normal. For paired single-row angular-contact ball bearings, and tapered roller bearings, double-row angular-contact ball bearings, and four-point contact ball bearings the values of the axial internal clearance may be set instead of the values of the radial clearance, as the axial clearance is of greater importance in application design for these bearing types. The values of the clearances are set in accordance with the relevant norms, e.g. ISO 5753: 1991, and are typically between 0.1 and 1 µm per mm bore diameter.

Figure 2 illustrates the assembling procedure of the ball bearing of Figure 1 and a pre-assembled bearing unit including the retainer ring 12c, the first separate ring 12a held in the retainer ring 1.2c and abutting on a flange protruding radially inwards, and the inner ring 10. The rolling elements 14a fit into the bearing in this pre-assembled state, what makes possible an almost full complement filling which may be, if desired, fixed with a cage (not shown) which may be axially mounted. The second separate ring 12b of the outer ring is then axially fit into the retainer rings up to a position where the clearance D' between the rings 12a, 12b is a little bit larger than is the estimated value thereof in the assembled state shown in Figure 1. The internal clearance C' of the bearing in this partially assembled state is slightly larger than the target value of the clearance C.

In this state, the second separate ring 12b has a position illustrated with the dashed lines in Figure 2. The second separate ring 12b is axially movable in both directions, wherein the movability is hindered by the friction between the second ring 12b and the retainer ring 12c, which may be overcome by using moderate axial pressing forces.

The internal play of the bearing is measured in the state illustrated by the dashed lines in Figure 2, e.g. by measuring the mobility of the balls within this clearance.

The thus measured value of the internal clearance in the pre-assembled state is then used for calculating a remaining displacement of the second ring 12b needed for obtaining the desired final value of the clearance C. This calculation uses a characteristic describing the dependence of the clearance on the axial displacement, wherein the characteristic may be obtained either empirically or using the geometric profile of the raceways.

After the adjustment of the axial position of the second ring 12b, the latter is located in the position illustrated by the dotted line in Figure 2 with the desired axial clearance. The procedure of measuring the clearance and axially displacing the second ring may be repeated iteratively, or the second ring may be displaced stepwise until the desired value of the clearance is obtained. The step of axially displacing the second ring 12b may in particular include progressively increasing an axial load exerted onto the second ring 12b until a desired shifting speed or shifting position is reached.

Once the desired value is obtained, the second ring 12b is permanently immobilized using the immobilization means, i.e. by adding the immobilization ring 12b, what does not require large pressing forces risking to affect the position of the second ring 12b, and by establishing a fixed adhesive connection between the immobilization ring 12b and the retainer ring 12c by adding the welding points 12e.

In contrast to other methods for assembling bearings with filling ratios beyond the ratio obtainable with the Conrad Method, e.g. ratios beyond 85% or 95%, all the essential elements of the bearing, i.e. the inner ring, the outer ring and the rolling elements 14 may subjected to a thermal treatment for hardening prior to the assembly of the bearing.

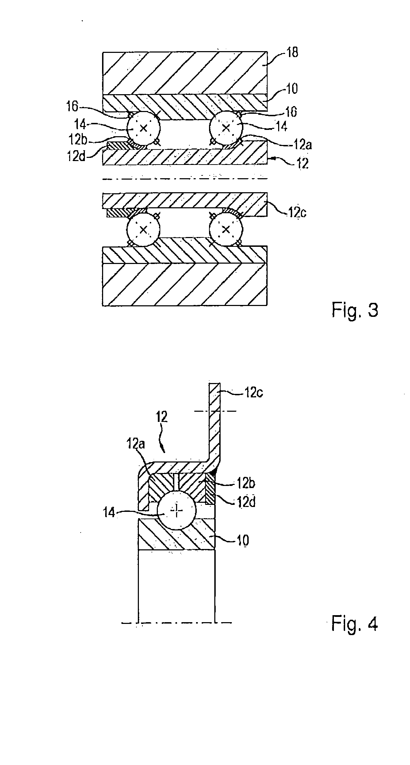

Figures 3 to 10 show further embodiments of the invention, wherein the same reference numbers show items of similar or equivalent functions. In order to avoid repetitions, the following description focuses on differences to the embodiment in Figures 1 and 2, and reference is made to the above description of the latter embodiments for the features which remain basically unchanged. In all the embodiments and the detailed description of the drawings, the ring which is divided into two parts, the distance of which is adjusted, has the reference number 12, and the other ring has the reference number 10. It is preferable that the ring with the reference number 10 is the rotating ring in the final application.

Figure 3 illustrates a second embodiment of the invention in the form of a double-row ball bearing for a tensioner. Two rows of balls 14 are arranged in an O-configuration. The inner ring 12 comprises two slim sheet-metal rings 12a, 12b constituting the inner raceways for the two sets of balls 14 which are held in a cage 16, respectively. The immobilization ring 12d of the second embodiment has a concavely curved axial end face which is fitted like a wedge under the second separate ring 12b so as to contact the side thereof opposite to the side constituting the raceway of the bearing.

The outer ring 10 is a single solid machined piece having two inclined raceways facing into opposite directions.

A pre-assembled bearing unit is obtained by first implementing a first row of rolling elements 14 formed as balls shown on the right-hand side of Figure 3 in the outer ring 10 from the right-hand side of Figure 3, then fitting the retainer ring 12c equipped with the first ring 12a of the split inner ring into the center hole of the balls 14 held in the cage 16, then implementing the second row of rolling elements 14 shown at the left-hand side of Figure 3 into the pre-assembled bearing unit such that the balls 14 in the cage come into contact with a left raceway of the outer ring 10, fitting the second ring 12b onto the retaining element 12 up to a preliminary position which is preferably displaced by less than 10 % of the ball diameter from its estimated final position to the left-hand side in Figure 3, measuring the remaining axial play of the bearing by axially shifting its outer ring to the left-hand side in Figure 3 while the inner ring 12 is kept fixed until the rolling elements 14 on the left-hand side simultaneously contact the raceways on the inner ring and the outer ring, and adjusting the axial position of the second ring 12b based on the thus measured value. If the desired internal clearance of the bearing is reached, the inner ring 12d is immobilized using the wedge-shaped immobilization ring 12d, which is finally fixed to the retainer ring 12c of the inner ring 12 by using an adhesive bond. It is self-evident that the position of the immobilization ring 12d can be adjusted simultaneously with the position of the second ring 12b of the inner ring in order to avoid an axial displacement of the inner ring 12b due to the axial forces generated when mounting the immobilization ring 12d.

Figure 4 is a third embodiment of the invention applied to a single-row support bearing with a non-rotating outer ring. As a difference to the bearing of Figure 1, the retainer ring 12c is a bushing formed, e.g., by deep-drawing or punching, and the immobilization ring 12d is a simple washer in axial contact with the second ring 12b of the divided outer ring 12. The curvature radii of the inner raceway and the outer raceway correspond to the radius of the rolling elements 14 which are balls.

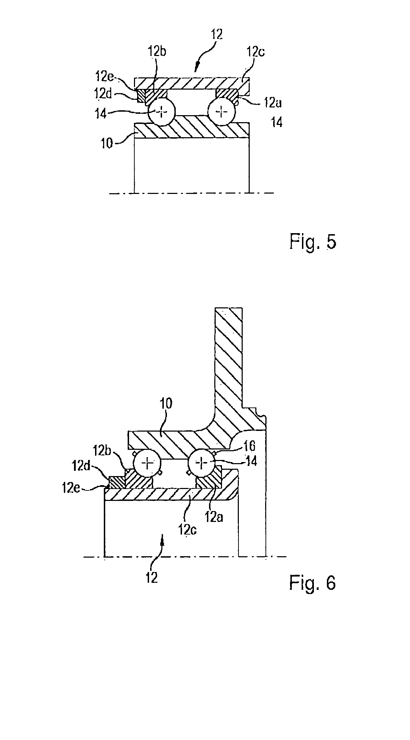

Figure 5 shows a fourth embodiment of the invention as applied to a hub bearing with a rotating inner ring 10 and a non-rotating outer ring 12 comprising a retainer ring 12c, a first ring 12a with a raceway for a first set of rolling elements 14, and a second ring 12b with a raceway for a second set of rolling elements 14. The position of the second ring 12b is adjusted as described above and immobilized by an immobilization ring 12d and a weld seam 12e or a weld point.

Figure 6 is a fifth embodiment of the invention in the form of a hub bearing with a rotating outer ring 10 and a split inner ring 12 fixed by a weld seam 12e in the position guaranteeing the desired internal clearance of the bearing.

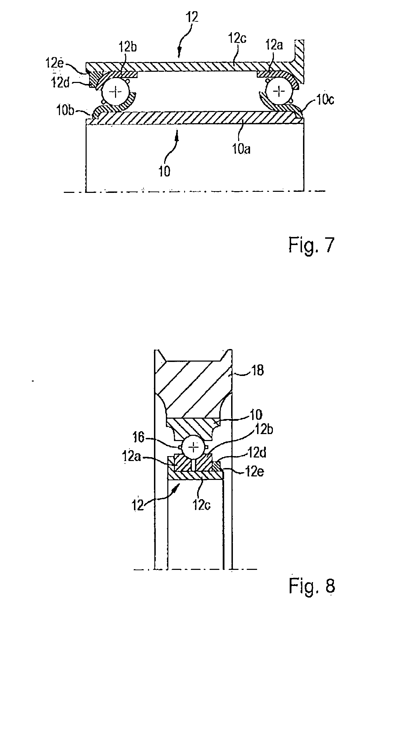

Figure 7 is a sixth embodiment of the invention as applied to a sheet-metal bearing hub, wherein not only the non-rotating outer ring 12, but also the rotating inner ring 10 has a multi-part configuration with a distance ring 10a in the form of a bushing with steps for holding two sheet-metal rings 10b, 10c on the opposite sides. The sheet-metal rings 10b, 10c carry the inner raceways of the bearing which has an overall X-configuration. The outer ring 12 comprises a first ring 12a fitted into a retainer ring 12c and a second ring 12b immobilized by using the immobilization ring 12d which is finally fixed with an adhesive bonding material 12e such as a welding seam or resin, or finally fixed by brazing, or by a caulking operation onto the second ring 12b, or by interference fit.

Figure 8 is a seventh embodiment of the invention, which is applied to a single-row tensioner with low clearance and maximum ball filling such that it is applicable for high loads. The overall configuration is similar to Figure 1, wherein the rings are exchanged, i.e. the outer ring 10 is a machined piece and the inner ring 12 has a split raceway constituted by a first ring 12a and a second ring 12b, which are immobilized in a position resulting in an internal clearance reduced to substantially zero.

The bearing is mounted in a pulley 18.

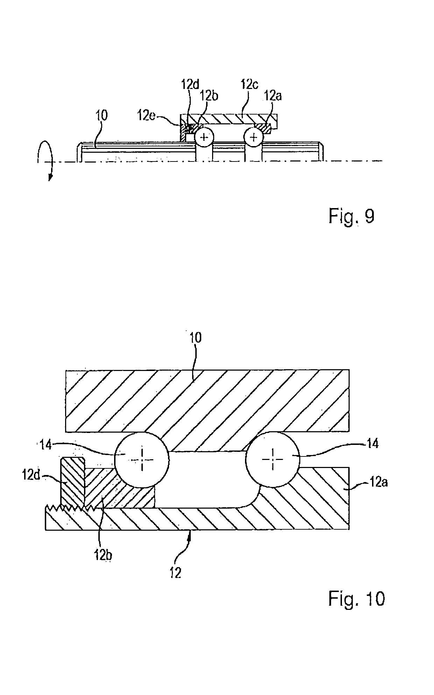

Figure 9 illustrates an eighth embodiment of the invention, which is applied to a water-pump spindle bearing in this case. The double-row bearing has inner raceways which are directly machined into a shaft of a water pump, which is, therefore, the inner ring 10 of the bearing.

Figure 10 illustrates a ninth embodiment of the invention with a rotating outer ring 10, a non-rotating inner ring 12 comprising a first ring 12a with a raceway for a first set of balls 14, and an axial extension in the form of a hollow cylinder on which a second ring 12b with a second part of the inner raceway for a second set of balls 14 is fitted. The axial extension of the first ring 12a, which has the function of the retainer ring of the previous embodiments is provided with a thread onto which an immobilization ring 12d may be screwed. The immobilization ring may be finally immobilized, e.g., with a check nut (not shown), or the second ring 12b may be provided with an inner thread and screwed onto the axial extension of the first ring 12a. The immobilization ring 12d could then lock the second ring 12b in a desired position as a counter-nut.

Additional possibilities for immobilizing the second ring in all of the embodiments include inserting a pin into a radial hole provided in either the second ring 12b or the immobilization ring 12d, overmoulding the inner ring 12b with a resin or any other suitable means for establishing a connection between the two rings 12a, 12b, be it directly or indirectly.

## Claims

1. Method for manufacturing a roller bearing including:
- an inner ring having at least one inner raceway;
- an outer ring having at least one outer raceway;
- at least one set of rolling elements (14);
- wherein at least one of the inner ring and the outer ring is split into two separate rings (12a, 12b) each having at least a part of a raceway formed therein; and
- immobilization means (12d, 12e) for immobilizing a movable one of the two separate rings (12b) so as to fix an axial distance between the separate rings (12a, 12b);
wherein said method comprises the steps of:
a. preparing a partially assembled bearing unit including a first ring (12a) out of said two separate rings (12a, 12b);
b. implementing the set of rolling elements (14) in the partially assembled bearing unit;
c. mounting a second ring (12b) of said two separate rings (12a, 12b) onto the bearing unit so as to be axially displaceable;
**characterized by** further comprising the steps of:
d. measuring an internal clearance (C') between said rolling elements (14) and a raceway provided on the second ring (12b);
e. axially displacing the second ring (12b) so as to achieve a desired value of the internal clearance (C), wherein the axial displacement is controlled based on the measured value of the internal clearance (C'); and
f. permanently immobilizing the second ring (12b) using the immobilization means (12d, 12e) such that an axial distance (D) between the two separate rings (12a, 12b) is fixed.

2. Method according to claim 1, further comprising the step of sealing the immobilization means (12d).

3. Method according to one of the preceding claims, wherein the partially assembled bearing unit includes a further set of rolling elements (14) contacting a raceway on the first ring (12a).

4. Method according to one of the preceding claims, wherein the ring (12) being split into two separate rings (12a, 12b) is a non-rotating ring of the bearing in its intended use.

5. Method according to one of the preceding claims, wherein said step of axially displacing said second ring (12b) for achieving a desired value of the internal clearance (C) includes calculating a target displacement value based on the measured axial clearance and displacing the second ring by an amount corresponding to said target value.

6. Method according to one of the preceding claims, wherein said step of axially displacing said second ring (12b) includes progressively increasing an axial load exerted onto the second ring (12b).

7. Method according to one of the preceding claims, wherein the inner ring, the outer ring and the rolling elements (14) are subjected to a thermal treatment for hardening prior to assembling the bearing.

8. Method according to one of the preceding claims, wherein the assembled bearing has rolling element filling ratio of at least 80%.

9. Method according to one of the preceding claims, wherein the assembled bearing has rolling element filling ratio of at least 95%.

10. Method according to one of the preceding claims, wherein the means for immobilizing the two separate rings (12a, 12b) includes an immobilization ring (12d) axially abutting with said second ring (12b)

11. Method according to one of the preceding claims, wherein the step of immobilizing the two separate rings (12a, 12b includes establishing an adhesive bond between:
- the first ring (12a) or a component (12c) immovably connected therewith, and
- an immobilization ring (12d) of the means for immobilizing the two separate rings (12a, 12b and/or said second ring (12b),

12. Method according to claim 11, wherein said adhesive bond (12e) is established using gluing, welding, soldering, grouting or riveting.

13. Method according to one of the previous claims, wherein the first ring (12a) is provided with an axially extending sleeve and wherein the second ring (12b) is fitted onto or into the sleeve of the first ring (12a).

14. Method according to one of the previous claims, wherein the step of permanently immobilizing the second ring (12b) is executed prior to the delivery and the mounting of the bearing unit at the bearing manufacturer's site.

15. Bearing unit including:
- an inner ring having at least one inner raceway;
- an outer ring having at least one outer raceway;
- at least set of rolling elements;
- wherein at least one of the inner ring and the outer ring is split into two separate rings (12a, 12b) each comprising at least a part of a raceway; and
- immobilization means (12d, 12e) for immobilizing a movable one of the two separate rings (12a, 12b) so as to fix an axial distance between the rings (12a, 12b);
**characterized in that**
an axial position of a second ring of said two separate rings (12a, 12b) and an axial distance between the two separate rings (12a, 12b) is fixed by means of said immobilization means (12d, 12e) only, such that an axial clearance (C) between the rolling elements (14) and a raceway provided on the second ring (12b) is set to a desired value.
